# NEUE EUROPÄISCHE PATENTSCHRIFT

(11) **EP 3 425 324 B2**
(45) Veröffentlichungstag und Bekanntmachung des Hinweises auf die Entscheidung über den Einspruch: **16.11.2022**
(45) Hinweis auf die Patenterteilung: 04.09.2019
(21) Anmeldenummer: 17179587.5
(22) Anmeldetag: 04.07.2017
(51) Int. Cl.: G06F 13/42

(54) **VERFAHREN ZUR PARAMETRIERUNG EINES SENSORS**
METHOD FOR ADJUSTING THE PARAMETERS OF A SENSOR
PROCÉDÉ DE PARAMÉTRAGE D'UN CAPTEUR

(43) Veröffentlichungstag der Anmeldung: 09.01.2019
(73) Patentinhaber: SICK AG, 79183 Waldkirch (DE)
(72) Erfinder: SCHMIDT, Fabian, 79331 Teningen (DE)
(74) Vertreter: Manitz Finsterwald Patent- und Rechtsanwaltspartnerschaft mbB

(56) Entgegenhaltungen:
- EP-A1- 2 026 033
- EP-A1- 3 070 556
- WO-A1-2012/110089
- WO-A1-2012/175120
- WO-A1-2015/158962
- US-A1- 2017 146 375

## Beschreibung

Die vorliegende Erfindung betrifft ein Verfahren zur dynamischen Parametrierung zumindest eines Sensors in einem industriellen Prozess.

In industriellen Prozessen, die beispielsweise der Herstellung, Sortierung und/oder Verarbeitung von Werkstücken oder Gegenständen dienen, wird üblicherweise eine Vielzahl von Sensoren eingesetzt, die die Werkstücke beobachten bzw. erfassen. Aus den Messdaten der Sensoren werden dann Daten erhoben, die der Steuerung des industriellen Prozesses dienen.

Üblicherweise werden die Parameter der Sensoren (das heißt deren Konfiguration) einmalig eingestellt. Bei dieser Einstellung werden die Parameter an die üblicherweise in dem industriellen Prozess vorherrschenden Randbedingungen angepasst. Beispielsweise kann es sich bei dem Sensor um eine Kamera handeln, deren Belichtungszeit auf die üblichen Helligkeitsverhältnisse und/oder die Farbe und Helligkeit der zu beobachtenden Werkstücke eingestellt wird. Werden in dem industriellen Prozess beispielsweise Werkstücke mit unterschiedlicher Farbe verarbeitet, so werden üblicherweise die Parameter der Kamera dann so eingestellt, dass die Kamera für sämtliche möglichen Bedingungen zufriedenstellende Ergebnisse liefert.

Nachteilig an einem solchen Vorgehen ist jedoch, dass die Einstellung der Parameter für ein sehr breites mögliches Anwendungsspektrum der Sensoren erfolgen muss, so dass die Qualität der von den Sensoren gelieferten Messdaten oft verbesserungswürdig ist.

Ein Verfahren gemäß dem Oberbegriff des Anspruchs 1 ist aus der EP 2 026 033 A1 bekannt. Die WO 2015/158962 A1 betrifft ein System zur Materialsortierung, bei welchem aus Sensordaten Steuerbefehle für Manipulatoren generiert werden.

Es ist die der Erfindung zugrundeliegende Aufgabe, ein Verfahren zur Parametrierung von Sensoren anzugeben, welches die Erhöhung der Qualität der Messdaten der Sensoren gestattet und zugleich eine Anpassung der Parametrierung der Sensoren in Echtzeit ermöglicht.

Diese Aufgabe wird erfindungsgemäßdurch ein Verfahren gemäß Anspruch 1 gelöst.

Das erfindungsgemäße Verfahren dient zur Parametrierung zumindest eines Sensors in einem industriellen Prozess. Bei dem Verfahren
- werden Messdaten des Prozesses mittels eines Konfigurationssensors und eines Produktivsensors erfasst, wobei der Konfigurationssensor und der Produktivsensor gleichartige Sensoren sind,
- werden die Messdaten zumindest des Konfigurationssensors oder nur des Konfigurationssensors an eine Steuereinheit übermittelt,
- generiert die Steuereinheit anhand der Messdaten einen Parametersatz für den Produktivsensor und übermittelt den Parametersatz an den Produktivsensor,
- verwendet der Produktivsensor den Parametersatz im Betrieb.

Die Erfindung verwendet zwei gleichartige Sensoren, nämlich den Konfigurationssensor und den Produktivsensor, wobei der Konfigurationssensor dem Produktivsensor vorgeschaltet ist. Anhand der von dem Konfigurationssensor ermittelten Messdaten des Prozesses erfolgt die Parametrierung des Produktivsensors.

Anhand der Messdaten des Konfigurationssensors kann z.B. festgestellt werden, welche Umgebungsbedingungen in dem Prozess gerade herrschen. Basierend auf den Umgebungsbedingungen (das heißt basierend auf den vorherrschenden Randbedingungen des Prozesses) kann dann eine auf die Randbedingungen optimierte Konfiguration in dem Produktivsensor verwendet werden. Durch die optimierte Konfiguration, die mittels des Parametersatzes an den Produktivsensor übermittelt wird, kann dann eine optimale Erfassung des industriellen Prozesses erfolgen. Es kann also ein optimierter Parametersatz, messobjektspezifisch und/oder zur Laufzeit bestimmt werden. Durch die Erstellung des Parametersatzes zur Laufzeit kann für die jeweils gerade vorherrschenden Umgebungsbedingungen der jeweils optimale Parametersatz verwendet werden. Die Einstellung des Parametersatzes erfolgt also dynamisch im Betrieb, um auf veränderte Umgebungsbedingungen reagieren zu können.

Der generierte Parametersatz kann zusätzlich auch an den Konfigurationssensor gesendet werden, um die Einstellungen des Konfigurationssensors zu verändern. Alternativ können die Einstellungen des Konfigurationssensors auch unverändert belassen werden.

Es wird daher ermöglicht, für verschiedene Randbedingungen verschiedene Parametersätze in den Produktivsensor zu laden, wodurch auch bei unterschiedlichen Randbedingungen jeweils optimale Ergebnisse mit dem Produktivsensor erzielt werden können. Dies wird durch den vorgelagerten Konfigurationssensor ermöglicht, der es gestattet, die Randbedingungen zu erfassen.

Um die Randbedingungen zu bestimmen, wertet die Steuereinheit die Messdaten des Konfigurationssensors aus und generiert basierend auf den Messdaten den entsprechenden Parametersatz für den Produktivsensor. Beispielsweise kann die Steuereinheit aus einer Vielzahl von Parametersätzen den jeweils gerade passenden Parametersatz für den Produktivsensor auswählen. Der Parametersatz wird anschließend beispielsweise als digitales Datenpaket an den Produktivsensor übermittelt. Der Produktivsensor übernimmt die in dem Parametersatz enthaltenen Parameter und ändert seine Konfiguration entsprechend ab. Daraufhin sind die Einstellungen des Produktivsensors zur Beobachtung des industriellen Prozesses an die gerade herrschenden Randbedingungen angepasst, so dass der Produktivsensor dann optimale Messdaten über den industriellen Prozess liefern kann.

Jeder der Sensoren (d.h. der Konfigurations- und der Produktivsensor) ist, bevorzugt mittels einer digitalen Datenverbindung, mit der Steuereinheit gekoppelt. Die Steuereinheit kann separat und beabstandet zu den Sensoren ausgebildet oder aber auch in einen der Sensoren integriert sein.

Beispielsweise kann es sich bei dem Konfigurations- und Produktivsensor jeweils um eine Kamera handeln, die der Erkennung eines Barcodes dienen, wobei der industrielle Prozess beispielsweise der Sortierung von Werkstücken (z.B. Paketen) anhand des Barcodes dient. Die standardmäßige Konfiguration der beiden Sensoren kann auf einen schwarzen Barcode vor einem weißen Hintergrund ausgelegt sein. Wird nun von dem Konfigurationssensor erkannt, dass der Hintergrund nicht mehr weiß, sondern beispielsweise dunkelgrau ist, kann die Steuereinheit einen Parametersatz erzeugen, bei welchem die Kontrasteinstellungen für den Produktivsensor verändert sind, so dass der Barcode durch den Produktivsensor auch zuverlässig vor dem dunkelgrauen Hintergrund erkannt werden kann.

Bevorzugt sind der Konfigurationssensor und der Produktivsensor separat voneinander ausgebildet und z.B. in unterschiedlichen Gehäusen angeordnet. Überdies können der Konfigurations- und der Produktivsensor derart angeordnet sein, dass sie dasselbe Werkstück nicht gleichzeitig erfassen können.

Bei dem Konfigurations- und Produktivsensor handelt es sich um gleichartige Sensoren, das heißt um Sensoren, welche zur Erfassung und/oder Ausgabe derselben Art von Messwert ausgebildet und/oder funktionsgleich sind. Beispielsweise können beide Sensoren zur Messung eines Abstandswertes, zur Messung der Temperatur, der Helligkeit oder zur Erfassung eines optischen Bildes eingerichtet sein. Bevorzugt sind der Konfigurations- und Produktivsensor zumindest im Wesentlichen baugleich ausgeführt.

Vorteilhafte Weiterbildungen der Erfindung sind der Beschreibung, der Zeichnung sowie den Unteransprüchen zu entnehmen.

Gemäß einer ersten vorteilhaften Ausführungsform ist der Parametersatz an den momentanen Zustand des Prozesses angepasst. Dies bedeutet, der Parametersatz ist an die momentan herrschenden Randbedingungen des industriellen Prozesses angepasst. Die Randbedingungen können beispielsweise die Art der momentan verarbeiteten Werkstücke umfassen, wobei sich die Werkstücke von Zeit zu Zeit ändern können und jeweils andere Parametersätze notwendig machen. Außerdem können die Randbedingungen die aktuelle Temperatur, die aktuelle Helligkeit, die momentane Verarbeitungsgeschwindigkeit des Prozesses und dergleichen umfassen.

Gemäß einer weiteren vorteilhaften Ausführungsform umfasst der Parametersatz ein Datenpaket mit digitalen Daten, wobei das Datenpaket zumindest teilweise in einem Speicher des Produktivsensors gespeichert wird. Der Parametersatz kann also digital übermittelt werden. Die in dem Parametersatz enthaltene Konfiguration kann nach dem Empfang des Parametersatzes bei dem Produktivsensor in einem Speicher des Produktivsensors gespeichert werden und beeinflusst dann die Arbeitsweise des Produktivsensors. Die Übermittlung des Parametersatzes als digitales Datenpaket gestattet es, die Steuereinheit auch weit entfernt von dem Konfigurationssensor und dem Produktivsensor anzuordnen, da das digitale Datenpaket auch z.B. über das Internet übertragen werden kann.

Gemäß einer weiteren vorteilhaften Ausführungsform werden durch den industriellen Prozess bearbeitete Werkstücke zeitlich nacheinander zuerst von dem Konfigurationssensor und danach von dem Produktivsensor erfasst. Zudem kann die Erfassung desselben Werkstücks durch den Konfigurationssensor und den Produktivsensor an unterschiedlichen Positionen des Werkstücks erfolgen. Beispielsweise können die Werkstücke mittels eines Förderbands zuerst an dem Konfigurationssensor und anschließend - beispielsweise mit einem Abstand von einigen Zentimetern oder Metern und mit einer Verzögerung von mehreren Sekunden - an dem Produktivsensor vorbeigeführt werden. Beim Vorbeiführen können der Konfigurations- und Produktivsensor jeweils Messdaten der jeweiligen Werkstücke erfassen und an die Steuereinheit übermitteln. Der Produktivsensor überwacht also bevorzugt denselben Prozess wie der Konfigurationssensor.

Gemäß einer weiteren vorteilhaften Ausführungsform erfolgt die Verwendung des Parametersatzes erst nach einer ausgewählten Verzögerungszeit. Aufgrund der Laufzeit, die das Werkstück zwischen dem Konfigurationssensor und dem Produktivsensor benötigt ist es bevorzugt, den Parametersatz bei dem Produktivsensor erst kurz (d.h. eine vorbestimmte Zeitdauer) vor dem Eintreffen des jeweiligen Werkstücks zu aktivieren. Auf diese Weise ist es möglich, dass mittels des Produktivsensors bis zum Eintreffen des Werkstücks, welches den "neuen" Parametersatz benötigt, noch vorher verarbeitete Werkstücke mit dem "alten" Parametersatz von dem Produktivsensor erfasst werden können.

Um die Verzögerung zu erzielen kann die Steuereinheit den entsprechenden Parametersatz mit einer Verzögerung an den Produktivsensor übertragen oder der Parametersatz kann einen Zeitpunkt enthalten, ab dem der Parametersatz von dem Produktivsensor verwendet werden soll. Dass die Verzögerungszeit ausgewählt ist, bedeutet, dass die Verzögerung bewusst durch z.B. die Steuereinheit verursacht wird und nicht durch beispielsweise ohnehin vorhandene Latenzen etc. erzeugt wird. Bei der Auswahl der Verzögerungszeit können aber ohnehin vorhandene Verzögerungen bzw. Latenzen berücksichtigt werden.

Gemäß einer weiteren vorteilhaften Ausführungsform wird die Verzögerungszeit anhand des Zustands des industriellen Prozesses ausgewählt. Dies bedeutet, die Verzögerungszeit kann z.B. anhand der momentanen Verarbeitungsgeschwindigkeit des Prozesses und/oder anhand der Zeit die das jeweilige Werkstück vom Konfigurationssensor bis zum Produktivsensor benötigt, ausgewählt werden.

Erfindungsgemäß erfasst der Produktivsensor Messdaten des Prozesses, werden die Messdaten des Produktivsensors an die Steuereinheit übermittelt, generiert die Steuereinheit anhand der Messdaten des Produktivsensors einen Parametersatz für einen weiteren Produktivsensor und übermittelt den Parametersatz an den weiteren Produktivsensor, wobei der weitere Produktivsensor im Betrieb den Parametersatz verwendet. Dies wird als rekursive In-Prozess Parametrierung bezeichnet.

Der Produktivsensor dient als Konfigurationssensor für den weiteren Produktivsensor. Es ist also möglich, eine Kette aus drei oder mehr gleichartigen Sensoren zu bilden, die denselben industriellen Prozess beobachten und bevorzugt entlang des Prozesses angeordnet sind. Hierbei kann jeweils einer der im Prozess vorgelagerten Sensoren als Konfigurationssensor für einen späteren Sensor dienen, wobei der spätere Sensordann als Produktivsensor dient. Durch die so gestaltete logische Kette können immer weiter verbesserte Einstellungen entlang des Prozesses realisiert werden, wodurch entlang des Prozesses immer bessere Messwerte bzw. Messdaten erzeugt werden können.

Gemäß einer weiteren vorteilhaften Ausführungsform ist die Steuereinheit separat zu dem Konfigurationssensor und dem Produktivsensor angeordnet und mit dem Konfigurationssensor und/oder dem Produktivsensor mittels einer Datenverbindung, insbesondere einer Ethernet-, Feldbus- oder USB-Verbindung gekoppelt.

Bevorzugt ist die Steuereinheit ein Server im Internet, in einem lokalen Netzwerk (LAN - Local Area Network), in der Cloud oder im sogenannten "Fog" (das heißt die Steuereinheit wird beispielsweise durch ein lokales Endgerät gebildet). Erfindungsgemäß ist die Steuereinheit ein Dienst, der auf einem Server in der Cloud läuft. Durch die Verwendung eines solchen (leistungsfähigen) Servers ist eine Skalierbarkeit problemlos möglich, das heißt, die Anzahl der Konfigurations- und Produktivsensoren kann nahezu beliebig groß sein.

Weiter bevorzugt können Algorithmen des maschinellen Lernens eingesetzt werden, um den Parametersatz für den Produktivsensor aus den Messdaten des Konfigurationssensors zu generieren. Für die beim maschinellen Lernen verwendeten Algorithmen kann eine Rückkopplungsschleife erstellt werden, bei welcher z.B. ein Benutzer oder ein Prozessleitsystem des Prozesses jeweils angibt, ob der generierte Parametersatz eine Verbesserung bewirkt hat. Auf diese Weise kann die Qualität der mit den Algorithmen des maschinellen Lernens erzeugten Parametersätze nach und nach gesteigert werden.

Gemäß einer weiteren vorteilhaften Ausführungsform führt die Steuereinheit eine Datenauswertung der von dem Produktivsensor erfassten Messdaten durch. In entsprechender Weise kann auch eine Datenauswertung der von dem Konfigurationssensor erfassten Messdaten durchgeführt werden. Die Messdaten sowohl des Konfigurationssensors als auch des Produktivsensors können daher zur Steuerung des industriellen Prozesses herangezogen werden. Die Datenauswertung wird auf dem Server (in der Cloud) durchgeführt und insbesondere je nach Erfordernis hinzugebucht. Hierdurch kann die Datenauswertung auf einem Rechner mit sehr großer Rechenleistung durchgeführt werden, was die Effizienz und Geschwindigkeit der Datenauswertung erhöht. Die ausgewerteten Messdaten können, insbesondere von der Steuereinheit, an das Prozessleitsystem des industriellen Prozesses übermittelt werden.

Durch die Auslagerung der Steuereinheit in die Cloud können auch rechenintensive Problemstellungen, wie z.B. Bildverarbeitung oder ähnliches, mittels Cloud-Computing effizient und zeitnah oder gar in Echtzeit durchgeführt werden. Dies ist von hoher Bedeutung insbesondere für die dynamische In-Prozess Parametrierung.

Es ist von Vorteil, wenn die Steuereinheit mit dem Prozessleitsystem (beispielsweise einer speicherprogrammierbaren Steuerung - SPS) des industriellen Prozesses gekoppelt ist. Ebenfalls ist es möglich, dass die Steuereinheit Teil des Prozessleitsystems ist. Die Steuereinheit kann bevorzugt Informationen von dem Prozessleitsystem erhalten, die die Erzeugung des jeweiligen Parametersatzes erleichtern bzw. verbessern. Beispielsweise kann die Steuereinheit von dem Prozessleitsystem Messdaten anderer Sensoren erhalten, wie beispielsweise aktuelle Temperatur- oder Gewichtswerte (z.B. der Werkstücke) und/oder die aktuelle Verarbeitungsgeschwindigkeit des industriellen Prozesses. Auch kann das Prozessleitsystem der Steuereinheit mitteilen, ob z.B. eine Beleuchtung aktiviert ist oder nicht.

Mittels des Prozessleitsystems können also auch verschiedenartige Sensoren (d.h. verschiedenartig zu dem Produktivsensor) zur Erzeugung von Messdaten herangezogen werden, wobei der generierte Parametersatz auch auf den Messdaten zumindest eines der verschiedenartigen Sensoren basiert.

Der Konfigurationssensor und der Produktivsensor können jeweils auch mit dem Prozessleitsystem gekoppelt sein, wobei z.B. das Prozessleitsystem die Messdaten des Konfigurationssensors und des Produktivsensors an die Steuereinheit weiterleitet.

Die Erfindung betrifft weiterhin ein System zur Überwachung eines industriellen Prozesses gemäß Anspruch 11.

Die obigen Erläuterungen zu dem erfindungsgemäßen Verfahren gelten für das erfindungsgemäße System entsprechend. Dies gilt insbesondere hinsichtlich Vorteilen und bevorzugten Ausführungsformen.

Gemäß einer vorteilhaften Ausführungsform des erfindungsgemäßen Systems umfassen der Konfigurationssensor und/oder der Produktivsensor jeweils einen Code-Leser mit einer Kamera. Die Kamera kann zur Bildaufnahme dienen, wobei der Code-Leser zur Erfassung eines Barcodes, eines Stacked-Codes ("Stapel-Code") und/oder eines 2D-Matrix-Codes (QR-Code) ausgebildet ist. Der Code kann jeweils auf einem der Werkstücke, welche mit dem industriellen Prozess verarbeitet werden, angebracht sein.

Nachfolgend wird die Erfindung rein beispielhaft unter Bezugnahme auf die Zeichnung beschrieben. Es zeigt:

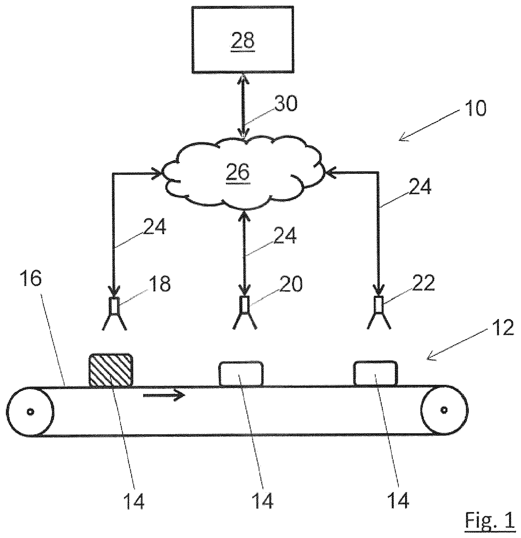

- Fig. 1: einen industriellen Prozess, welcher mittels dreier Sensoren beobachtet wird.

Fig. 1 zeigt ein System 10, welches einen industriellen Prozess 12 beobachtet. Der industrielle Prozess 12 umfasst das Transportieren von Paketen 14 auf einem Förderband 16 und die Sortierung der Pakete 14. Die Pakete 14 umfassen auf ihrer Oberseite jeweils einen Barcode (nicht gezeigt), welcher durch das System 10 erfasst werden soll. Anhand des jeweiligen Barcodes wird die Sortierung (nicht gezeigt) vorgenommen.

Das System 10 umfasst einen Konfigurationssensor 18, einen ersten Produktivsensor 20 und einen zweiten Produktivsensor 22.

Die Sensoren 18, 20, 22 umfassen jeweils eine Kamera zur Erfassung des Barcodes bzw. zur Erzeugung von Bildern der Barcodes. Die Sensoren 18, 20, 22 sind jeweils baugleich ausgeführt und beabstandet voneinander oberhalb des Förderbands 16 angeordnet.

Die Sensoren 18, 20, 22 sind jeweils mittels einer Ethernet-Verbindung 24 mit dem Internet 26 gekoppelt. Ein Server, welcher als Steuereinheit 28 dient, ist ebenfalls mit dem Internet 26 über eine Datenverbindung 30 gekoppelt, so dass eine Datenkommunikation zwischen den Sensoren 18, 20, 22 und der Steuereinheit 28 möglich ist.

Im Betrieb des Systems 10 und des industriellen Prozesses 12 werden die Pakete 14 mittels des Förderbands 16 (in der Fig. 1) von links nach rechts bewegt. Dabei wird ein jeweiliges Paket 14 (bzw. der auf dem Paket befindliche Barcode) zunächst von dem Konfigurationssensor 18 erfasst. Der Konfigurationssensor 18 erzeugt ein Bild des jeweiligen Pakets 14 und sendet das Bild über die Ethernet-Verbindung 24, das Internet 26 und die Datenverbindung 30 an die Steuereinheit 28.

Die Steuereinheit 28 verarbeitet das empfangene Bild und kann beispielsweise feststellen, dass es sich um einen schwarzen Barcode vor weißem Hintergrund handelt. Die Steuereinheit 28 kann dann einen Parametersatz generieren, der auf diese Art von Barcode optimiert ist. Der Parametersatz wird dann von der Steuereinheit 28 an den ersten Produktivsensor 20 (und ggf. auch an weiteren Sensoren) übertragen. Sobald das jeweilige Paket 14 vom Konfigurationssensor 18 zum ersten Produktivsensor 20 befördert wurde, verwendet der erste Produktivsensor 20 den von der Steuereinheit 28 empfangenen Parametersatz, so dass gegenüber der Erfassung durch den Konfigurationssensor 18 bereits ein optimiertes Ergebnis erzielt werden kann. Hierbei erzeugt der Produktivsensor 20 ebenfalls ein Bild des jeweiligen Pakets 14 und übermittelt das Bild an die Steuereinheit 28. Erkennt die Steuereinheit 28 weitere Optimierungsmöglichkeiten, so generiert die Steuereinheit 28 einen weiteren Parametersatz und übermittelt diesen an den zweiten Produktivsensor 22, so dass dort ein noch weiter optimiertes Ergebnis realisiert werden kann. Ist keine weitere Optimierung mehr möglich, übermittelt die Steuereinheit 28 dem zweiten Produktivsensor 22 denselben Parametersatz wie auch dem Produktivsensor 20.

Im Betrieb kann der Fall eintreten, dass sich die Beschaffenheit des Barcodes ändert, beispielsweise weil ein Barcode mit dunklem Hintergrund verarbeitet werden muss, welcher auf einem größeren Paket 14 befestigt ist (wie in Fig. 1 mit dem linken Paket 14 dargestellt). In diesem Falle erkennt die Steuereinheit die nun geänderten Randbedingungen anhand des von dem Konfigurationssensor 18 erzeugten Bildes (das heißt anhand der Messdaten des Konfigurationssensors). Die Steuereinheit 28 generiert dann einen neuen Parametersatz für den ersten und zweiten Produktivsensor 20, 22, welcher beispielsweise geänderte Einstellungen für den Kontrast der jeweiligen Kamera und die Fokuslage der jeweiligen Kamera beinhaltet. Auf diese Weise kann auch für das größere Paket 14 eine zuverlässige Erkennung des Barcodes gewährleistet werden.

### Bezugszeichenliste

- 10: System
- 12: industrieller Prozess
- 14: Paket
- 16: Förderband
- 18: Konfigurationssensor
- 20: erster Produktivsensor
- 22: zweiter Produktivsensor
- 24: Ethernet-Verbindung
- 26: Internet
- 28: Steuereinheit
- 30: Datenverbindung

## Patentansprüche

1. Verfahren zur dynamischen Parametrierung zumindest eines Sensors (20, 22) in einem industriellen Prozess (12), bei welchem
- Messdaten des Prozesses (12) mittels eines Konfigurationssensors (18) und eines Produktivsensors (20) erfasst werden, wobei der Konfigurationssensor (18) und der Produktivsensor (20) gleichartige Sensoren sind,
- die Messdaten des Konfigurationssensors (18) an eine Steuereinheit (28) übermittelt werden,
- die Steuereinheit (28) anhand der Messdaten einen Parametersatz für den Produktivsensor (20) generiert und den Parametersatz an den Produktivsensor (20) übermittelt,
- der Produktivsensor (20) den Parametersatz im Betrieb verwendet, **dadurch gekennzeichnet, dass**
- die Steuereinheit (28) durch einen Dienst auf einem Cloud-Server realisiert wird,
wobei
- der Produktivsensor (20) Messdaten des Prozesses (12) erfasst,
- die Messdaten des Produktivsensors (20) an die Steuereinheit (28) übermittelt werden,
- die Steuereinheit (28) anhand der Messdaten des Produktivsensors (20) einen Parametersatz für einen weiteren Produktivsensor (22) generiert und den Parametersatz an den weiteren Produktivsensor (22) übermittelt,
- der weitere Produktivsensor (22) im Betrieb den Parametersatz verwendet.

2. Verfahren nach Anspruch 1,
**dadurch gekennzeichnet, dass**
der Parametersatz an den momentanen Zustand des Prozesses (12) angepasst ist.

3. Verfahren nach Anspruch 1 oder 2,
**dadurch gekennzeichnet, dass**
der Parametersatz ein Datenpaket mit digitalen Daten umfasst, wobei das Datenpaket zumindest teilweise in einem Speicher des Produktivsensors (20) gespeichert wird.

4. Verfahren nach zumindest einem der vorstehenden Ansprüche,
**dadurch gekennzeichnet, dass**
durch den Prozess (12) bearbeitete Werkstücke (14) zeitlich nacheinander zuerst von dem Konfigurationssensor (18) und danach von dem Produktivsensor (20) erfasst werden.

5. Verfahren nach zumindest einem der vorstehenden Ansprüche,
**dadurch gekennzeichnet, dass**
die Verwendung des Parametersatzes erst nach einer ausgewählten Verzögerungszeit erfolgt.

6. Verfahren nach Anspruch 5,
**dadurch gekennzeichnet, dass**
die Verzögerungszeit anhand des Zustands des Prozesses (12) ausgewählt wird.

7. Verfahren nach zumindest einem der vorstehenden Ansprüche,
**dadurch gekennzeichnet, dass**
die Steuereinheit (28) separat zu dem Konfigurationssensor (18) und dem Produktivsensor (20) angeordnet ist und mit dem Konfigurationssensor (18) und/oder dem Produktivsensor (20) mittels einer Datenverbindung (24, 26, 30), insbesondere einer Ethernet-, Feldbus- oder USB-Verbindung gekoppelt ist.

8. Verfahren nach zumindest einem der vorstehenden Ansprüche,
**dadurch gekennzeichnet, dass**
Algorithmen des maschinellen Lernens verwendet werden, um den Parametersatz zu generieren.

9. Verfahren nach zumindest einem der vorstehenden Ansprüche,
**dadurch gekennzeichnet, dass**
die Steuereinheit (28) eine Datenauswertung von von dem Produktivsensor (20) erfassten Messdaten durchführt.

10. Verfahren nach zumindest einem der vorstehenden Ansprüche,
**dadurch gekennzeichnet, dass**
die Steuereinheit (28) Informationen von einem Prozessleitsystem des industriellen Prozesses erhält, welche die Erzeugung des Parametersatzes erleichtern und/oder den Parametersatz verbessern.

11. System (10) zur Überwachung eines industriellen Prozesses (12) mit einem Konfigurationssensor (18), einem Produktivsensor (20) und einer Steuereinheit (28), wobei der Konfigurationssensor (18) und der Produktivsensor (20) gleichartige Sensoren sind, wobei
- der Konfigurationssensor (18) ausgebildet ist, Messdaten des Prozesses (12) zu erfassen und an die Steuereinheit (28) zu übermitteln,
- die Steuereinheit (28) ausgebildet ist, anhand der Messdaten einen Parametersatz für den Produktivsensor (20) zu generieren und den Parametersatz an den Produktivsensor (20) zu übermitteln,
- der Produktivsensor (20) ausgebildet ist, im Betrieb den Parametersatz zu verwenden,
**dadurch gekennzeichnet, dass**
- die Steuereinheit (28) durch einen Dienst auf einem Cloud-Server realisiert ist,
wobei
- der Produktivsensor (20) ausgebildet ist, Messdaten des Prozesses (12) zu erfassen,
- das System (10) ausgebildet ist, die Messdaten des Produktivsensors (20) an die Steuereinheit (28) zu übermitteln,
- die Steuereinheit (28) ausgebildet ist, anhand der Messdaten des Produktivsensors (20) einen Parametersatz für einen weiteren Produktivsensor (22) zu generieren und den Parametersatz an den weiteren Produktivsensor (22) zu übermitteln,
- der weitere Produktivsensor (22) ausgebildet ist, im Betrieb den Parametersatz zu verwenden.

12. System gemäß Anspruch 11,
**dadurch gekennzeichnet, dass**
der Konfigurationssensor (18) und/oder der Produktivsensor (20) einen Code-Leser mit einer Kamera umfassen.

## Claims

1. A method for the dynamic parameterization of at least one sensor (20, 22) in an industrial process (12) in which
- measurement data of the process (12) are acquired by means of a configuration sensor (18) and of a productive sensor (20), with the configuration sensor (18) and the productive sensor (20) being sensors of the same kind;
- the measurement data of the configuration sensor (18) are transmitted to a control unit (28);
- the control unit (28) generates a parameter set for the productive sensor (20) based on the measurement data and transmits the parameter set to the productive sensor (20); and
- the productive sensor (20) uses the parameter set in operation, **characterized in that**
- the control unit (28) is implemented by a service on a cloud server, wherein
- the productive sensor (20) acquires measurement data of the process (12);
- the measurement data of the productive sensor (20) are transmitted to the control unit (28);
- the control unit (28) generates a parameter set for a further productive sensor (22) based on the measurement data of the productive sensor (20) and transmits the parameter set to the further productive sensor (22); and
- the further productive sensor (22) uses the parameter set in operation.

2. A method in accordance with claim 1,
**characterized in that**
the parameter set is adapted to the current state of the process (12).

3. A method in accordance with claim 1 or claim 2,
**characterized in that**
the parameter set comprises a data packet having digital data, with the data packet being stored at least partly in a memory of the productive sensor (20).

4. A method in accordance with at least one of the preceding claims,
**characterized in that**
workpieces (14) machined by the process (12) are detected after one another in time first by the configuration sensor (18) and then by the productive sensor (20).

5. A method in accordance with at least one of the preceding claims,
**characterized in that**
the use of the parameter set only takes place after a selected time delay.

6. A method in accordance with claim 5,
**characterized in that**
the time delay is selected based on the state of the process (12).

7. A method in accordance with at least one of the preceding claims,
**characterized in that**
the control unit (28) is arranged separately from the configuration sensor (18) and from the productive sensor (20) and is coupled to the configuration sensor (18) and/or to the productive sensor (20) by means of a data connection (24, 26, 30), in particular an Ethernet connection, a fieldbus connection or a USB connection.

8. A method in accordance with at least one of the preceding claims,
**characterized in that**
algorithms of machine learning are used to generate the parameter set.

9. A method in accordance with at least one of the preceding claims,
**characterized in that**
the control unit (28) carries out a data evaluation of measurement data acquired by the productive sensor (20).

10. A method in accordance with at least one of the preceding claims,
**characterized in that**
the control unit (28) receives information from a process control system of the industrial process, said information facilitating the generation of the parameter set and/or improving the parameter set.

11. A system (10) for monitoring an industrial process (12) comprising a configuration sensor (18), a productive sensor (20) and a control unit (28), wherein the configuration sensor (18) and the productive sensor (20) are sensors of the same kind, wherein
- the configuration sensor (18) is configured to acquire measurement data of the process (12) and to transmit them to the control unit (28);
- the control unit (28) is configured to generate a parameter set for the productive sensor (20) based on the measurement data and to transmit the parameter set to the productive sensor (20); and
- the productive sensor (20) is configured to use the parameter set in operation,
**characterized in that**
- the control unit (28) is implemented by a service on a cloud server, wherein
- the productive sensor (20) is configured to acquire measurement data of the process (12);
- the system (10) is configured to transmit the measurement data of the productive sensor (20) to the control unit (28);
- the control unit (28) is configured to generate a parameter set for a further productive sensor (22) based on the measurement data of the productive sensor (20) and to transmit the parameter set to the further productive sensor (22); and
- the further productive sensor (22) is configured to use the parameter set in operation.

12. A system in accordance with claim 11,
**characterized in that**
the configuration sensor (18) and/or the productive sensor (20) comprises/comprise a code reader having a camera.

## Revendications

1. Procédé de paramétrage dynamique d'au moins un capteur (20, 22) dans un processus industriel (12), dans lequel
- des données de mesure du processus (12) sont acquises au moyen d'un capteur de configuration (18) et d'un capteur productif (20), le capteur de configuration (18) et le capteur productif (20) étant des capteurs de même type,
- les données de mesure du capteur de configuration (18) sont transmises à une unité de commande (28),
- l'unité de commande (28) génère un jeu de paramètres pour le capteur productif (20) en se basant sur les données de mesure, et transmet le jeu de paramètres au capteur productif (20),
- le capteur productif (20) utilise le jeu de paramètres pendant le fonctionnement,
**caractérisé en ce que**
- l'unité de commande (28) est réalisée par un service sur un serveur virtuel en nuage ("cloud"), et
- le capteur productif (20) acquiert des données de mesure du processus (12),
- les données de mesure du capteur productif (20) sont transmises à l'unité de commande (28),
- l'unité de commande (28) génère un jeu de paramètres pour un autre capteur productif (22) en se basant sur les données de mesure du capteur productif (20), et transmet le jeu de paramètres à l'autre capteur productif (22),
- l'autre capteur productif (22) utilise le jeu de paramètres pendant le fonctionnement.

2. Procédé selon la revendication 1,
**caractérisé en ce que**
le jeu de paramètres est adapté à l'état momentané du processus (12).

3. Procédé selon la revendication 1 ou 2,
**caractérisé en ce que**
le jeu de paramètres comprend un paquet de données ayant des données numériques, le paquet de données étant mémorisé au moins partiellement dans une mémoire du capteur productif (20).

4. Procédé selon l'une au moins des revendications précédentes,
**caractérisé en ce que**
des pièces à œuvrer (14) traitées par le processus (12) sont détectées successivement dans le temps tout d'abord par le capteur de configuration (18) et ensuite par le capteur productif (20).

5. Procédé selon l'une au moins des revendications précédentes,
**caractérisé en ce que**
le jeu de paramètres n'est utilisé qu'après un temps de retard choisi.

6. Procédé selon la revendication 5,
**caractérisé en ce que**
le temps de retard est choisi en se basant sur l'état du processus (12).

7. Procédé selon l'une au moins des revendications précédentes,
**caractérisé en ce que**
l'unité de commande (28) est agencée séparément du capteur de configuration (18) et du capteur productif (20) et est couplée au capteur de configuration (18) et/ou au capteur productif (20) au moyen d'une connexion de données (24, 26, 30), en particulier au moyen d'une connexion Ethernet, d'une connexion de bus de terrain ou d'une connexion USB.

8. Procédé selon l'une au moins des revendications précédentes,
**caractérisé en ce que**
des algorithmes de l'apprentissage machine sont utilisés pour générer le jeu de paramètres.

9. Procédé selon l'une au moins des revendications précédentes,
**caractérisé en ce que**
l'unité de commande (28) exécute une évaluation des donnés de mesure acquises par le capteur productif (20).

10. Procédé selon l'une au moins des revendications précédentes,
**caractérisé en ce que**
l'unité de commande (28) reçoit des informations d'un système de gestion du processus industriel, qui facilitent la génération du jeu de paramètres et/ou qui améliorent le jeu de paramètres.

11. Système (10) pour surveiller un processus industriel (12), comportant un capteur de configuration (18), un capteur productif (20) et une unité de commande (28), le capteur de configuration (18) et le capteur productif (20) étant des capteurs de même type,
dans lequel
- le capteur de configuration (18) est réalisé pour acquérir des données de mesure du processus (12) et pour les transmettre à l'unité de commande (28),
- l'unité de commande (28) est réalisée pour générer un jeu de paramètres pour le capteur productif (20) en se basant sur les données de mesure, et pour transmettre le jeu de paramètres au capteur productif (20),
- le capteur productif (20) est réalisé pour utiliser le jeu de paramètres pendant le fonctionnement,
**caractérisé en ce que**
- l'unité de commande (28) est réalisée par un service sur un serveur virtuel en nuage ("cloud"),
et
- le capteur productif (20) est réalisé pour acquérir des données de mesure du processus (12),
- le système (10) est réalisé pour transmettre les données de mesure du capteur productif (20) à l'unité de commande (28),
- l'unité de commande (28) est réalisée pour générer un jeu de paramètres pour un autre capteur productif (22) en se basant sur les données de mesure du capteur productif (20), et pour transmettre le jeu de paramètres à l'autre capteur productif (22),
- l'autre capteur productif (22) est réalisé pour utiliser le jeu de paramètres pendant le fonctionnement.

12. Système selon la revendication 11,
**caractérisé en ce que**
le capteur de configuration (18) et/ou le capteur productif (20) comporte(nt) un lecteur de code pourvu d'une caméra.
